(19) Europäisches Patentamt
European Patent Office
Office européen des brevets

(11) Publication number: **0 087 208**
**B1**

(12) **EUROPEAN PATENT SPECIFICATION**

(45) Date of publication of patent specification: **26.02.86**

(51) Int. Cl.[4]: **B 01 D 53/14,** B 01 D 53/34

(21) Application number: **83300188.6**

(22) Date of filing: **14.01.83**

(54) **A process for removal of hydrogen sulfide from gaseous mixtures with severely sterically hindered secondary amino compounds.**

(30) Priority: **18.01.82 US 339891**
**18.01.82 US 339901**

(43) Date of publication of application:
**31.08.83 Bulletin 83/35**

(45) Publication of the grant of the patent:
**26.02.86 Bulletin 86/09**

(84) Designated Contracting States:
**BE DE FR GB IT NL**

(56) References cited:
**EP-A-0 057 019**
**DE-A-2 134 379**
**GB-A-1 362 384**
**US-A-3 681 015**

(73) Proprietor: **Exxon Research and Engineering Company**
**P.O.Box 390 180 Park Avenue**
**Florham Park New Jersey 07932 (US)**

(72) Inventor: **Sartori, Guido**
**25 West Price Street**
**Linden New Jersey (US)**
Inventor: **Savage, David William**
**6 Sunset Drive**
**Summit New Jersey (US)**
Inventor: **Stogryn, Eugene Leo**
**3 Sharp Road**
**Edison New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 087 208 B1

## Description

This invention relates to a process for the removal of $H_2S$ from normally gaseous mixtures wherein absorbent solutions containing severely sterically hindered secondary amino alcohols are employed. More preferably, this invention is directed to a process for selectively removing $H_2S$ from gaseous mixtures containing $H_2S$ and $CO_2$ employing these absorbent solutions.

The treatment of acid gas mixtures containing, *inter alia*, $CO_2$ and $H_2S$ with aqueous amine solutions in an absorber tower typically results in the simultaneous removal of substantial amounts of both the $CO_2$ and $H_2S$. For example, in one such process generally referred to as the "aqueous amine process", relatively concentrated amine solutions are employed. A recent improvement on this process involves the use of sterically hindered amines to obtain nearly complete removal of acid gases such as $CO_2$ and $H_2S$. This type of process may be used where the partial pressures of the $CO_2$ and related gases are low. Another process often used for specialized applications where the partial pressure of $CO_2$ is extremely high and/or where many acid gases are present, e.g., $H_2S$, COS, $CH_3SH$ and $CS_2$ involves the use of an amine in combination with a physical absorbent, generally referred to as the "nonaqueous solvent process". An improvement on this process involves the use of sterically hindered amines and organic solvents as the physical absorbent.

GB—A—1362384 discloses a process for the selective removal of hydrogen sulphide from a gas containing both $H_2S$ and $CO_2$ in which the gas is contacted with an alkanolamine solution in a tray column with less than 20 contacting trays, at a temperature below 45°C, the gas being passed through the column at a velocity of at least 1 cm/sec.

US—A—3681015 discloses a process wherein acidic gases are removed from gas streams by contacting the stream with a solvent composition comprising (a) a specified organic solvent having certain physical properties, being unreactive with amines and containing at least one oxygen, nitrogen, sulphur or phosphorus-containing functional group other than hydroxyl and (b) a secondary monohydric alkanolamine.

It is often desirable, however, to treat acid gas mixtures containing both $CO_2$ and $H_2S$ so as to remove the $H_2S$ selectively from the mixture, thereby minimizing removal of the $CO_2$. Selective removal of $H_2S$ results in a relatively high $H_2S/CO_2$ ratio in the separated acid gas which simplifies the conversion of $H_2S$ to elemental sulfur using the Claus process.

The typical reactions of aqueous secondary and tertiary amines with $CO_2$ and $H_2S$ can be represented as follows:

$$H_2S+R_3N \rightleftharpoons R_3NH^+ + SH^- \quad (1)$$

$$H_2S+R_2NH \rightleftharpoons R_2NH_2^+ + SH^- \quad (2)$$

$$CO_2+R_3N+H_2O \rightleftharpoons R_3NH^+ + HCO_3^- \quad (3)$$

$$CO_2+2R_2NH \rightleftharpoons R_2NH_2^+ + R_2NCOO^- \quad (4)$$

wherein R is an organic radical which may be the same or different and may be substituted with a hydroxyl group. The above reactions are reversible, and the partial pressures of both $CO_2$ and $H_2S$ are thus important in determining the degree to which the above reactions occur.

While selective $H_2S$ removal is applicable to a number of gas treating operations including treatment of hydrocarbon gases from shale pyrolysis, refinery gas and natural gas having a low $H_2S/CO_2$ ratio, it is particularly desirable in the treatment of gases wherein the partial pressure of $H_2S$ is relatively low compared to that of $CO_2$ because the capacity of an amine to absorb $H_2S$ from the latter type gases is very low. Examples of gases with relatively low partial pressures of $H_2S$ include synthetic gases made by coal gasification, sulfur plant tail gas and low-Joule fuel gases encountered in refineries where heavy residual oil is being thermally converted to lower molecular weight liquids and gases.

Solutions of primary and secondary amines such as monoethanolamine (MEA), diethanolamine (DEA), dipropanolamine (DPA), and hydroxyethoxyethylamine (DGA) are known to absorb both $H_2S$ and $CO_2$ gas. Diisopropanolamine (DIPA) is relatively unique among secondary aminoalcohols in that it has been used industrially, alone or with a physical solvent such as sulfolane, for selective removal of $H_2S$ from gases containing $H_2S$ and $CO_2$.

The tertiary amine, methyldiethanolamine (MDEA), has a high degree of selectivity toward $H_2S$ absorption over $CO_2$, but recently it was discovered that aqueous solutions of dialkylmonoalkanolamines, and particularly diethylmonoethanolamine (DEAE), have higher selectivity and capacity for $H_2S$ removal at higher loading levels than MDEA solutions.

It has now been discovered that absorbent solutions of a certain class of amino alcohols defined as severely sterically hindered amino alcohols have a high selectivity for $H_2S$ compared to $CO_2$. These amino alcohols surprisingly maintain their high selectivity at high $H_2S$ and $CO_2$ loadings.

In general, the present invention relates to a process for the removal of $H_2S$ from a normally gaseous stream with an absorbent solution containing a severely sterically hindered secondary amino alcohol having a cumulative $^-E_s$ value (Taft's steric hindrance constant defined hereinbelow) greater than 1.75.

In a preferred embodiment of the invention the process involves the selective absorption of $H_2S$ from a normally gaseous stream also containing $CO_2$ by contacting the stream with a solution of the amino alcohol under conditions whereby $H_2S$ is selectively absorbed from the stream, wherein the amino alcohol is additionally characterized by having a $pK_a$ value at 20°C greater than 8.6. The

absorbent solution may additionally contain water, a physical absorbent, preferably sulfolane, or a mixture thereof.

In a still more preferred embodiment, after the $H_2S$ is selectively absorbed from the stream, the absorbent solution containing the $H_2S$ is regenerated at least partially and the regenerated solution is recycled for selective absorption of $H_2S$ by recontacting it with the stream. Preferably, the regeneration step is carried out by heating and stripping the solution of any of its absorbed $H_2S$ and more preferably by heating and stripping the solution with steam.

In the drawings:

Fig. 1 is a diagrammatic flow sheet illustrating an experimental sparged absorber unit for use in rapid determination of the selectivity of the amino compound for selective removal of $H_2S$ from gaseous streams containing $H_2S$ and $CO_2$.

Fig. 2 graphically illustrates the selectivity of $H_2S$ plotted against moles of $H_2S$ and $CO_2$ loading per mole of amine for tertiarybutylaminoethoxyethanol (TBEE) and tertiarybutylaminoethanol (TBE) as compared to methyldiethanolamine (MDEA) as control.

Fig. 3 graphically illustrates the selectivity for $H_2S$ plotted against the $H_2S$ and $CO_2$ loading for tertiarybutylaminoethoxyethanol (TBEE) as compared to methyldiethanolamine (MDEA), secondarybutylaminoethoxyethanol (SBEE) and isopropylaminoethoxyethanol (IPEE) as control.

Fig. 4 graphically illustrates the selectivity for $H_2S$ plotted against moles of $H_2S$ and $CO_2$ loading for 3 - (tertiarybutylamino) - 1 - propanol (TBP), 3 - aza - 2,2 - dimethyl - 1,6 - hexanediol (ADMHD), 3 - (tertiarybutylamino) - n - butanol (TBB), 2 - tertiarybutylamino) - 1 - propanol (2—TBP) as compared to methyldiethanolamine (MDEA) as control.

Fig. 5 is a diagrammatic flow sheet illustrating an absorption-regeneration unit for selective removal of $H_2S$ from gaseous streams containing $H_2S$ and $CO_2$.

Fig. 6 graphically illustrates the $H_2S$ leak rate plotted against $H_2S$ loading in mole/mole amine for tertiarybutylaminoethoxyethanol (TBEE) as compared to methyldiethanolamine (MDEA) as control using the unit of Fig. 5.

The severely sterically hindered secondary amino alcohols herein may have either acyclic (linear or branched) or cyclic moieties attached to the nitrogen atom(s) of the amino compounds. By the term "severely sterically hindered" it is meant that the nitrogen atom of the amino moiety is attached to one or more bulky carbon groupings. Thus, the severely sterically hindered amino compounds herein have a degree of steric hindrance such that the cumulative $^-E_s$ value (Taft's steric hindrance constant) is greater than about 1.75 as calculated from the values given for primary amines in Table V in D. F. DeTar, Journal of Organic Chemistry, *45* 5174 (1980).

Another means for determining whether a secondary amino alcohol is "severely sterically hindered" is by measuring its $^{15}N$ nuclear magnetic resonance (NMR) chemical shift. By such measurements it has been found that the "ordinary sterically hindered" secondary amino alcohols may have a $^{15}N$ NMR chemical shift greater than about δ+40 ppm, when a 90% by wt. amine solution in 10% by wt. $D_2O$ at 35°C is measured by a spectrometer using liquid (neat) ammonia at 25°C as a zero reference value. For example, severely sterically hindered amino alcohols such as 2 - (2 - tertiarybutylamino) propoxyethanol, 3 - (tertiarybutylamino) - 1 - propanol, 2 - (2 - isopropylamino) - propoxyethanol and tertiarybutylaminoethoxyethanol had measured $^{15}N$ NMR chemical shift values of δ+74.3, δ+65.9, δ+65.7, and δ+60.5 ppm, respectively, whereas the ordinary sterically hindered amine, secondarybutylaminoethoxyethanol, and the nonsterically hindered amine, n - butylaminoethoxyethanol, had measured $^{15}N$ NMR chemical shift values of δ+48.9 and δ35.8 ppm, respectively. When the cumulative $^-E_s$ values (Taft's steric hindrance constants of these amines) are plotted against the $^{15}N$ NMR chemical shift values of the amino alcohols mentioned above, a straight line is observed. As evident from the data shown herein, the amino alcohols of the invention referred herein as "severely sterically hindered amino alcohols" were analyzed as having $^{15}N$ NMR chemical shift values greater than δ+50 ppm under the test conditions described above and had a higher $H_2S$ selectivity than those amino alcohols having an $^{15}N$ NMR chemical shift less than δ+50 ppm. The tertiary amino compound used for comparison herein, methyldiethanolamine, had a measured $^{15}N$ NMR chemical shift value of δ27.4.

The amino alcohol of this invention is an amino alcohol or aminoether alcohol and more preferably is of the general formula:

$$R_1-NH-\left(\begin{matrix}R_2\\ |\\ C\\ |\\ R_3\end{matrix}\right)_x-\left[O-\left(\begin{matrix}R_4\\ |\\ C\\ |\\ R_5\end{matrix}\right)_y\right]_z-OH$$

wherein $R_1$ is a primary alkyl or primary hydroxyalkyl radical having 1 to 8 carbon atoms or a branched chain alkyl, branched chain hydroxyalkyl, cycloalkyl or hydroxycycloalkyl radical having a total of 3 to 8 carbon atoms, $R_2$, $R_3$, $R_4$ and $R_5$ are each independently hydrogen or a $C_1$—$C_4$ alkyl or $C_1$—$C_4$ hydroxyalkyl radical, with the proviso that when the carbon atom of $R_1$ directly bonded to the nitrogen atom is primary, both $R_2$ and $R_3$ (bonded to the carbon atom directly bonded to the nitrogen atom) are alkyl or hydroxyalkyl radicals and that when the carbon atom of $R_1$ directly bonded to the nitrogen atom is secondary, at least one $R_2$ or $R_3$ (bonded to the carbon atom directly bonded to the nitrogen atom) is an alkyl or hydroxyalkyl radical, x and y are each positive integers independently ranging from 2 to 4 and z is 0 or a positive integer ranging from 1 to 4. Preferably, $R_1$ is a tertiary butyl,

secondary butyl, isopropyl, tertiary amyl or cylohexyl radical.

Representative of the amino alcohols useful herein are tertiarybutylaminoethoxyethanol, 2 - (2 - tertiarybutylamino) propoxyethanol, tertiary-amylaminoethoxyethanol (1 - methyl - 1 - ethylpropylamino) ethoxyethanol, 2 - (2 - isopropylamino) - propoxyethanol, tertiarybutylaminoethanol, 2 - (isopropylamino) - 1 - propanol, 3 - (tertiarybutylamino) - n - butanol, 2 - (tertiary - butylamino) - 1 - propanol, 3 - (tertiarybutylamino) - 1 - propanol, 3 - aza - 2, 2 - dimethyl - 1, 6 - hexane-diol, and 2,5 - diaza - 2,4,4 - trimethyl - 7 - heptanol. Of these, the most preferred amino compound herein is tertiarybutylaminoethoxyethanol.

It is noted that the amino alcohols herein are preferably aminoether alcohols because the indiscriminate increase in molecular weight of tertiary amino alcohols or sterically hindered secondary amino alcohols, for the purpose of lowering volatility, may have an adverse effect on the utility of the non-ether amino alcohol as an absorbent for aqueous gas scrubbing purposes. Simple molecular weight changes may decrease (a) aqueous solubility and/or (b) amine base strength.

The volatility losses of amino alcohols without an ether functionality can be controlled or completely eliminated by the alkoxylation of severely sterically hindered secondary amino alcohols. The process of alkoxylation has been found to have a negligible effect on the $pK_a$ of the amino alcohol so that the gas scrubbing chemistry which is a function of base strength is not altered. Significantly, it has been found that the increase in molecular mass by alkoxylation does not decrease aqueous solubility. In fact, in some cases alkoxylation can greatly increase aqueous solubility.

The amino alcohols used in the selective absorption process of the present invention are further characterized as having a $pK_a$ value at 20°C greater than 8.6, preferably greater than about 9.5 and more preferably the $pK_a$ value of the amino alcohol will range between about 9.5 and about 10.6. If the $pK_a$ is less than 8.6 the reaction with $H_2S$ is decreased, whereas if the $pK_a$ of the amino alcohol is much greater than about 10.6, an excessive amount of steam is required to regenerate the solution. Also, to ensure operational efficiency with minimal losses of the amino alcohol, the amino alcohol may have a relatively low volatility. For example, the boiling point of the amine (at 760 mm) is typically greater than about 180°C, preferably greater than 200°C, and more preferably greater than 225°C.

The amino alcohols herein may also be characterized by their high solubility in water at selective $H_2S$ removal conditions, and most of the compounds are also generally soluble in polar organic solvent systems which may or may not contain water. The term "absorbent solution" as used herein comprises a solution wherein the amino compound is dissolved in a solvent, preferably selected from water or a physical absorbent or a mixture of water and physical absorbent. Solvents which are physical absorbents (as opposed to the amino compounds which are chemical absorbers) by definition function to solubilize the amino compounds and include, e.g., aliphatic acid amides, N-alkylated pyrrolidones, sulfones, sulfoxides, glycols and the mono- and diethers thereof. The preferred physical absorbents herein are sulfones, and most particularly, sulfolane.

The absorbent solution may have a concentration of amino alcohol of about 0.1 to 6 moles per liter of the total solution, and preferably 1 to 4 moles per liter, depending primarily on the specific amino alcohol employed and the solvent system utilized. If the solvent system is a mixture of water and a physical absorbent, the typical effective amount of the physical absorbent employed may vary from 0.1 to 5 moles per liter of total solution, and preferably from 0.5 to 3 moles per liter, depending mainly on the type of amino alcohol being utilized. The dependence of the concentration of amino alcohol on the particular compound employed is significant because increasing the concentration of amino alcohol may reduce the basicity of the absorbent solution, thereby adversely affecting its selectivity for $H_2S$ removal, particularly if the amino alcohol has a specific aqueous solubility limit which will determine maximum concentration levels within the range given above. It is important, therefore, that the proper concentration level appropriate for each particular amino alcohol be maintained to ensure satisfactory results.

The solution of this invention may include a variety of additives typically employed in selective gas removal processes, e.g., antifoaming agents, antioxidants, corrosion inhibitors, and the like. The amount of these additives will typically be in the range that they are effective, i.e., an effective amount.

Also, the amino alcohols described herein may be admixed with other amino compounds (i.e., any amines other than those employed as amino alcohols herein) as a blend, preferably with methyldiethanolamine, to form the absorbent solution. The ratio of the respective amino compounds may vary widely, for example, from 1 to 99 weight percent of the severely sterically hindered secondary amino alcohols described herein.

Three characteristics which are of ultimate importance in determining the effectiveness of the amino alcohol compounds herein for $H_2S$ removal are "selectivity", "loading" and "capacity". The term "selectivity" as used throughout the specification is defined as the following mole ratio fraction:

$$\frac{(\text{moles of } H_2S/\text{moles of } CO_2) \text{ in liquid phase}}{(\text{moles of } H_2S/\text{moles of } CO_2) \text{ in gaseous phase}}$$

The higher this fraction, the greater the selectivity of the absorbent solution for the $H_2S$ in the gas mixture.

By the term "loading" is meant the concentraction of the $H_2S$ and $CO_2$ gases physically dissolved and chemically combined in the absorbent solution as expressed in moles of gas per mole of the amine. The best amino compounds are those which exhibit good selectivity up to a relatively high loading level. The amino compounds used in the practice of the present invention may have a "selectivity" of not substantially less than 10 at a "loading" of 0.1 moles, preferably, a "selectivity" of not substantially less than 10 at a loading of 0.2 or more moles of $H_2S$ and $CO_2$ per mole of the amino compound.

"Capacity" is defined as the moles of $H_2S$ loaded in the absorbent solution at the end of the absorption step minus the moles of $H_2S$ loaded in the absorbent solution at the end of the desorption step. High capacity enables one to reduce the amount of amine solution to be circulated, use less heat or steam during regenerations.

The amino compounds herein are typically capable of reducing the $H_2S$ in gaseous mixtures to a relatively low level, e.g., less than about 200 ppm and typically have a relatively high capacity for $H_2S$, e.g., greater than about 0.2 mole of $H_2S$ per mole of amine. The amino compounds may be characterized as having a "kinetic selectivity" for $H_2S$, i.e., a faster reaction rate for $H_2S$ than for $CO_2$ at absorption conditions. In addition, they may be characterized as having a higher capacity for $H_2S$ at equivalent kinetic selectivity for $H_2S$ over $CO_2$. This higher capacity results in the economic advantage of lower steam requirements during regeneration.

The normally gaseous stream herein necessarily includes $H_2S$, ordinarily in gaseous form. (The term "normally" refers to ambient conditions of temperature and pressure.) It may optionally include other gases such as $CO_2$, $N_2$, $CH_4$, $H_2$, $CO$, $H_2O$, COS, HCN, $C_2H_4$, $NH_3$, and the like. Often such gas mixtures are found in combustion gases, refinery gases, town gas, natural gas, syn gas, water gas, propane, propylene, heavy hydrocarbon gases, etc. The absorbent solution herein is particularly effective when the gaseous mixture is a gas, obtained, for example, from shale oil retort gas, coal or gasification of heavy oil with air/steam or oxygen/steam thermal conversion of heavy residual oil to lower molecular weight liquids and gases, or in sulfur plant tail gas clean-up operations.

The absorption step of this invention generally involves contacting the normally gaseous stream with the absorbent solution in any suitable contacting vessel. In such processes, the normally gaseous mixture from which the $H_2S$ is to be removed may be brought into intimate contact with the absorbent solution using conventional means, such as a tower or vessel packed with, for example, rings or with sieve plates, or a bubble reactor.

In a typical mode of practising the invention wherein $H_2S$ is selectively absorbed from a mixture also containing $CO_2$, the absorption step is conducted by feeding the normally gaseous mixture into the lower portion of the absorption tower while fresh absorbent solution is fed into the upper region of the tower. The gaseous mixture, freed largely from the $H_2S$, emerges from the upper portion of the tower, and the loaded absorbent solution, which contains the selectively absorbed $H_2S$, leaves the tower near or at its bottom. Preferably, the inlet temperature of the absorbent solution during the absorption step is in the range of from about 20 to about 100°C, and more preferably from 40 to about 60°C. Pressures may vary widely; acceptable pressures are between 0.4 and 140.6 kg/cm$^2$, preferably 1.4 and 105.5 kg/cm$^2$, and most preferably 1.8 and 70.3 kg/cm$^2$ in the absorber. The contacting takes place under conditions such that the $H_2S$ is selectively absorbed by the solution. The absorption conditions and apparatus are designed so as to minimize the residence time of the liquid in the absorber to reduce $CO_2$ pickup while at the same time maintaining sufficient residence time of gas mixture with liquid to absorb a maximum amount of the $H_2S$ gas. The amount of liquid required to be circulated to obtain a given degree of $H_2S$ removal will depend on the chemical structure and basicity of the amino compound and on the partial pressure of $H_2S$ in the feed gas. Gas mixtures with low partial pressures such as those encountered in thermal conversion processes will require more liquid under the same absorption conditions than gases with higher partial pressures such as shale oil retort gases.

A typical procedure for the selective $H_2S$ removal phase of the process comprises selectively absorbing $H_2S$ via countercurrent contact of the gaseous mixture containing $H_2S$ and $CO_2$ with the aqueous solution of the amino compound in a column containing a plurality of trays at a low temperature, e.g., below 45°C, and at a gas velocity of at least about 9.1 cm/sec (based on "active" or aerated tray surface), depending on the operating pressure of the gas, said tray column having fewer than 20 contacting trays, with, e.g., 4—16 trays being typically employed. Alternatively, packed beds may be used in place of trays.

After contacting the normally gaseous mixture with the absorbent solution, which becomes saturated or partially saturated with $H_2S$, the solution may be at least partially regenerated so that it may be recycled back to the absorber. As with absorption, the regeneration may take place in a single liquid phase. Regeneration or desorption of the acid gases from the absorbent solution may be accomplished by conventional means such as pressure reduction of the solution or increase of temperature to a point at which the absorbed $H_2S$ flashes off, or by passing the solution into a vessel of similar construction to that used in the absorption step, at the upper portion of the vessel, and passing an inert gas such as air or nitrogen or preferably steam

upwardly through the vessel. The temperature of the solution during the regeneration step should be in the range from about 50 to 170°C, and preferably from about 80 to 120°C, and the pressure of the solution on regeneration should range from about 0.04 to about 7.0 kg/cm$^2$ (3.9 to 585 KN/m$^2$), preferably 0.07 to about 3.5 kg/cm$^2$ (6.9 to 343 KN/m$^2$). The absorbent solution, after being cleansed of at least a portion of the $H_2S$ gas, may be recycled back to the absorbing vessel. Makeup absorbent may be added as needed.

In the preferred regeneration technique, the $H_2S$-rich solution is sent to the regenerator wherein the absorbed components are stripped by the steam which is generated by re-boiling the solution. Pressure in the flash drum and stripper is usually 0.07 to about 3.5 kg/cm$^2$ (6.9 to 343 KN/m$^2$), preferably 1.05 to about 2.1 kg/cm$^2$ (103 to 206 KN/m$^2$) and the temperature is typically in the range from about 50 to 170°C, preferably about 80 to 120°C. Stripper and flash temperatures will, of course, depend on stripper pressure; thus, at about 1.05 to 2.1 kg/cm$^2$ (103 to 206 KN/m$^2$) stripper pressures, the temperature will be about 80 to about 120°C during desorption. Heating of the solution to be regenerated may very suitably be effected by means of indirect heating with low-pressure steam. It is also possible, however, to use direct injection of steam.

The amino alcohols herein are found to be superior to those used in the past, particularly to MDEA and DEAE, in terms of both selectivity and capacity for maintaining selectivity over a broad loading range. Typically, a gaseous stream to be treated having a 1:10 mole ratio of $H_2S$:$CO_2$ from an apparatus for thermal conversion of heavy residual oil, or a Lurgi coal gas having a mole ratio of $H_2S$:$CO_2$ of less than 1:10 will yield an acid gas having a mole ratio of $H_2S$:$CO_2$ of about 1:1 after treatment by the process of the present invention. The process herein may be used in conjunction with another $H_2S$ selective removal process; however, it is preferred to carry out the process of this invention by itself, since the amino compounds are extremely effective by themselves in preferential absorption of $H_2S$.

The invention is illustrated further by the following examples, which, however, are not to be taken as limiting in any respect. All parts and percentages, unless expressly stated to be otherwise, are by weight. All p$K_a$ values, unless otherwise noted, are measured at 20°C. The abbreviation b.p. designates boiling point.

Example 1

Preparation of tertiarybutylaminoethoxyethanol

A solution of 41.76 g of tertiarybutylamine and 28.66 g of 2 - chloroethoxyethanol in 115 ml of ethanol was charged to a 300 ml metal autoclave and heated at 150°C for 3 hrs. The contents of the cooled reactor was treated with KOH, refluxed for one hour, cooled, filtered, vacuum stripped and distilled. The product, obtained from the distillate in a 77% yield, was analyzed to be tertiarybutylaminoethoxyethanol having a b.p. of 117°C at 10 mm.

Example 2

Selective $H_2S$ removal from a mixture containing $H_2S$ and $CO_2$

Fig. 1 illustrates the sparged absorber unit, operated on a semibatch mode, used to evaluate the selectivity of $H_2S$ removal of the amino compounds of the invention herein. A gas mixture comprised of 10% $CO_2$, 1% $H_2S$ and 89% $N_2$, expressed in volume percent, respectively, was passed from a gas cylinder (not shown) through line *30* to a meter *31* measuring the rate at which the gas is fed to the absorber. For all examples this rate was 3.6 liters per minute. The gas was then passed through line *32* to a gas chromatography column (not shown) continuously monitoring the composition of the inlet gas and through lines *33* and *34* to a sparged absorber unit *35*, which is a cylindrical glass tube 45 cm high and 3.1 cm in diameter charged with 100 ml of the absorbent amine solution *36*. The gas was passed through the solution at a solution temperature of 40°C, and 10-ml samples of the solution were periodically removed from the bottom of the absorber unit through lines *34* and *37* to be analyzed for $H_2S$ and $CO_2$ content. The $H_2S$ content in the liquid sample was determined by titration with silver nitrate. The $CO_2$ content of the liquid sample was then analyzed by acidifying the sample with an aqueous solution of 10% HCl and measuring the evolved $CO_2$ by weight gain of NaOH-coated asbestos.

While the solution was being periodically withdrawn from the bottom of the absorber unit, the gas mixture was removed from the top thereof via line *38* to a trap *39* which served to scrub out any $H_2S$ in the outlet gas. The resulting gas could optionally then be passed via lines *40* and *41* for final disposal or via line *42* to a gas chromatography column (not shown) for periodic evaluation of the composition of the outlet gas to check for system leaks. For purposes of the examples, the $H_2S$ and $CO_2$ contents of the inlet gas phase were measured and the $H_2S$ and $CO_2$ contents of the liquid phase were determined as described above. These data were used to calculate selectivity values of the amine as defined above, which were plotted as a function of the loading of the absorbent solution with $H_2S$ and $CO_2$ in units of moles acid gas per mole of the amino compound.

The above procedure was employed using as the absorbent solution aqueous 3M solutions of tertiarybutylaminoethoxyethanol (TBEE), tertiarybutylaminoethanol (TBE) and methyldiethanolamine (MDEA) as control. The selectivity plot for each amine solution is indicated in Fig. 2.

As can be seen from Fig. 2, both TBEE and TBE are superior to MDEA in terms of $H_2S$ selectivity, particularly at high $H_2S$ and $CO_2$ loadings. It is noted that TBEE is even superior to TBE evem though both compounds have a p$K_a$ of about 10.3.

Example 3

The procedure of Example 2 was repeated using as the absorbent solution aqueous 3M solutions of tertiarybutylaminoethoxyethanol (TBEE), secondarybutylaminoethoxyethanol (SBEE) as comparison, isopropylaminoethoxyethanol (IPEE) as comparison, and methyldiethanolamine (MDEA) as comparison. The selectivity plot for each amine solution is shown in Fig. 3. The plots clearly show that TBEE is far superior to SBEE, IPEE, and MDEA in terms of $H_2S$ selectivity. The plots taken together with the summation (Taft) $^{-}E_s$ values for the compounds tested also indicate that the severe steric hindrance of TBEE (resulting from the additional carbon atom attached to the carbon atom directly attached to nitrogen atom) has a profound effect on the selective $H_2S$ absorption properties of the compound.

Example 4

The procedure of Example 2 was repeated using as the absorbent solution aqueous 3M solutions of (1 - methyl - 1 - ethyl - propylamino)ethoxyethanol (b.p. 153°C (2 mm), $pK_a=10.10$) and tertiaryamylaminoethoxyethanol (b.p. 124°C (10 mm), $pK_a=10.05$). The $H_2S$ selectivity using each of these solutions was superior to MDEA, but not quite as good as TBEE.

Example 5

The procedure of Example 2 was repeated using as the absorbent solution aqueous 3M solutions of 3 - (tertiarybutylamino) - 1 - propanol (TBP), 3 - aza - 2,2 - dimethyl - 1,6 - hexanediol (ADMHD), 3 - (tertiarybutylamino) - n - butanol (TBB) and 2 - (tertiarybutylamino) - 1 - propanol (2-TBP). The selectivity plots for these secondary amino alcohols as compared to methyldiethanolamine (MDEA) as control are indicated in Fig. 4.

The data in Figs. 2—4 also show that the amino alcohols of the present invention have very high capacity for both $H_2S$ and $CO_2$ compared to methyldiethanolamine MDEA) in addition to high $H_2S$ selectivities. It will be apparent from an inspection of the data in Figs. 2—4 that if the absorption process is conducted under conditions such that the amino compound has a long contact time with the gases to be absorbed, the selectivity of $H_2S$ decreases, but the overall capacity for both $CO_2$ and $H_2S$ remains rather high. Therefore, one may, in some instances, wish to carry out a "non-selective" absorption process to take advantage of the large absorption capacity of the amino alcohols of the invention. Accordingly, one may carry out a "non-selective" acid gas removal absorption process using the amino compounds of the invention. Such "non-selective" processes are particularly useful in scrubbing natural gases which contain relatively high levels of $H_2S$ and low to nil levels of $CO_2$. As such, the amino alcohols of the invention may replace some or all of monoethanolamine (MEA) or diethanolamine (DEA) commonly used for such scrubbing processes.

Example 6

Several secondary aminoalcohols and aminoether alcohols were further examined to determine their boiling points (b.p.), $pK_a$ values at 20°C and their cumulative $^{-}E_s$ values (Taft's steric hindrance constants) by using the Taft $^{-}E_s$ value system presented by D. F. DeTar, Journal Organic Chemistry, *45* 5174 (1980) in Table V. The results of these evaluations are shown in Table I.

TABLE I

| Amino compound | $pK_a$ | b.p., °C (mm) | $\bar{E}$ |
|---|---|---|---|
| 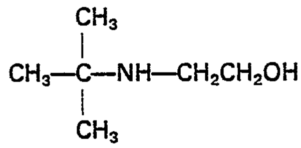 (TBE) | 10.2 | 90(25) | 2.10 |
| 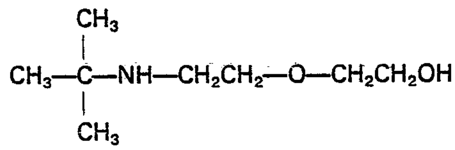 (TBEE) | 10.3 | 117(10) | 2.10 |
| 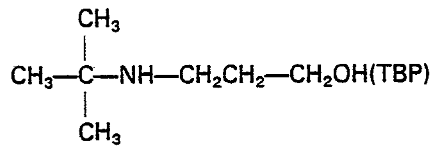(TBP) | 11.05 | 106(20) | 2.13 |
| 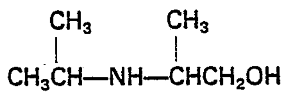 | 10.40 | 75(22) | 1.86 |
| 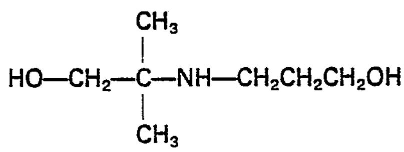 (ADMHD) | 10.05 | 125(0.8) | 2.13 |
| 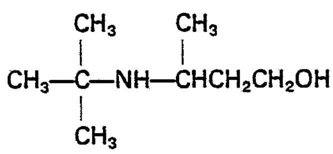 | 10.8 | 90(10) | 2.7 |
| 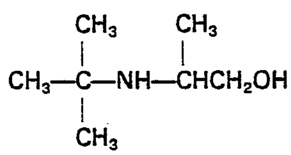 | 10.63 | 85(20) | 2.67 |
| 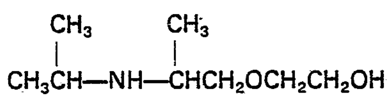 | 10.4 | 119(20) | 1.86 |
| 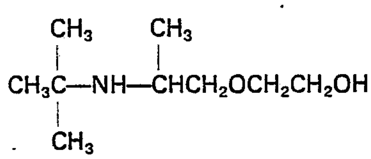 | 10.6 | 122(19) | 2.67 |
| Comparative compounds | | | |
| 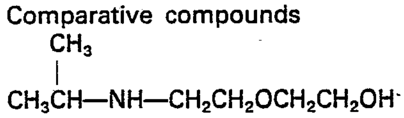 (IPEE) | 10.3 | 104(7) | 1.29 |
| 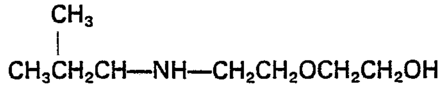 (SBEE) | 10.3 | 118(10) | 1.32 |
| $CH_3N-(CH_2CH_3)_2$ (MDEA) | | | 0.79 |

It can be seen from the values in the table that the severely sterically hindered amino alcohols of the invention have cumulative (Taft) $^-E_s$ values greater than 1.75. Those secondary amino compounds having cumulative $^-E_s$ values below 1.75 have been found to lack the ability to selectively absorb $H_2S$ versus $CO_2$ at a level greater than MDEA apparently due to the propensity of the amine to react with the $CO_2$.

Example 7
Continuous process for selective $H_2S$ removal

This example demonstrates a comparison of the severely sterically hindered secondary aminoether alcohol, tertiarybutylaminoethoxyethanol (TBEE), with methyldiethanolamine (MDEA) using a unit such as that shown in Fig. 5.

An aqueous 1.5M solution of tertiarybutylaminoethoxyethanol (TBEE) was charged via pipe *5* into the upper portion of a gas-liquid countercurrent absorption column *2* having a lower section *3* and an upper section *4* and being segregated by three packed beds. The gas to be purified was a synthetic mixture containing 1% $H_2S$, 11% $CO_2$ and 88% $N_2$, expressed in volume percent, respectively. The gas was introduced through line *1* into the lower portion of column *2* at a gas flow rate of 67 standard cubic feet per minute. The absorber pressure was adjusted to 2.2 kg/cm$^2$. The gas freed from $H_2S$ left through pipe *6* and was analyzed. The aqueous amine solution containing $H_2S$ and $CO_2$ was flowed toward the lower portion of the absorber, from which it was discharged through pipe *7*. The solution was then passed via pump *8* through a simulated heat exchanger and cooler *9* disposed in pipe *7*, which allowed the hot solution from the regenerator *12* to equilibrate in temperature with the cooler solution from the absorber column *2*. The hot rich solution was then entered, via pipe *7*, to a flash drum *10* equipped with a line (not shown) which vents to line *13* and then introduced by pipe *11* into the upper portion of the regenerator *12*, which is equipped with several plates and effects desorption of the $H_2S$ gas. The pressure of the regenerator was set at 2.3 kg/cm$^2$. The $H_2S$ gas was passed through a pipe *13* into a condenser *14* wherein cooling and condensation of water and amine solution from the gas occurred. The gas was then entered into a separator *15* wherein further condensation took place. The condensed solution was returned through pipe *16* to the upper portion of the regenerator *12*. The gas remaining from the condensation, which contains $H_2$ and some $CO_2$, may be removed through pipe *17* for final disposal (e.g., to a vent or incinerator or to an apparatus which converts the $H_2S$ to sulfur, such as a Claus unit or a Stretford conversion unit (not shown). The solution liberated from the gas which it contained was flowed downward through the regenerator *12* and left through pipe *18* at the bottom of the regenerator for transfer to a reboiler *19*. Reboiler *19*, equipped with a steam injection pipe *20* and a condensate exit pipe (not shown), vaporized a portion of this solution to drive additional $H_2S$ therefrom. The $H_2S$ driven off was returned via pipe *21* to the lower section of the regenerator *12* and left through pipe *13* for entry into the condensation stages of gas treatment. The solution remaining in the reboiler *19* was drawn through pipe *22*, cooled in heat exchanger *9*, and introduced via the action of pump *23* through pipe *5* into absorber *2*.

The flow rate was slowly adjusted downward until the $H_2S$ leak rate showed a dramatic increase.

The experiment was repeated using in place of tertiarybutylaminoethoxyethanol (TBEE), an aqueous 3M solution of methyldiethanolamine (MDEA) as control. The results of both experiments were plotted wherein the $H_2S$ leak rate, in parts per million by volume (Vppm), was plotted against $H_2S$ loading in moles/mol amine. The results are shown in Fig. 6. These results show that tertiarybutylaminoethoxyethanol gives far greater cleanup, even at higher $H_2S$ loadings, in a continuous selective $H_2S$ removal process than methyldiethanolamine (MDEA).

In summary, this invention is seen to provide a process for removing $H_2S$ from gaseous streams utilizing a special class of amino compounds characterized as severely sterically hindered secondary amino compounds which have a high selectivity for $H_2S$ in preference to $CO_2$ which selectivity is maintained at high $H_2S$ and $CO_2$ loading levels.

## Claims

1. A process for removing $H_2S$ from a normally gaseous stream with an absorbent solution, said solution comprising a solvent and a sterically hindered secondary amino alcohol having a cumulative $^-E_s$ value greater than 1.75.

2. A process according to claim 1 wherein the solvent is water, a physical absorbent or a mixture thereof.

3. A process according to either of claims 1 and 2 wherein the normally gaseous stream also contains $CO_2$ and $H_2S$ is selectively absorbed from the stream.

4. A process according to any one of claims 1 to 3 wherein the amino alcohol has a $pK_a$ value at 20°C greater than 8.6.

5. A process according to any one of claims 1 to 4 wherein the total concentration of amino alcohol in the absorbent solution is in the range of from about 0.1 to 6 moles per litre, the process is conducted at a temperature ranging from about 20 to 100°C and at a pressure ranging from 0.4 to 140.6 kg/cm$^2$ (39 to 13779 KN/m$^2$), the absorbent solution is regenerated by heating at a temperature ranging from 50 to about 170°C and at a pressure ranging from 0.07 to about 3.5 kg/cm$^2$ (6.9 to 343 KN/m$^2$) and the solution is stripped of its adsorbed $H_2S$.

6. A process according to any one of claims 1 to 5 wherein the amino alcohol is defined by the general formula:

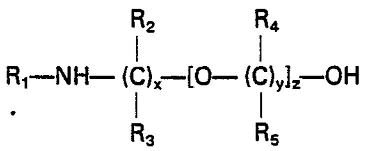

wherein $R_1$ is a primary alkyl or primary hydroxyalkyl radical having 1 to 8 carbon atoms or a branched chain alkyl, branched chain hydroxyalkyl, cycloalkyl or hydroxycycloalkyl radical having a total of 3 to 8 carbon atoms, $R_2$, $R_3$, $R_4$ and $R_5$ are each independently hydrogen or a $C_1$—$C_4$ alkyl or $C_1$—$C_4$ hydroxyalkyl radical, with the proviso that when the carbon atom of $R_1$ directly bonded to the nitrogen atom is primary, both $R_2$ and $R_3$ are alkyl or hydroxyalkyl radicals and that when the carbon atom of $R_1$ directly bonded to the nitrogen atom is secondary, at least one of $R_2$ or $R_3$ is an alkyl or hydroxyalkyl radical, x and y are each positive integers independently ranging from 2 to 4 and z is 0 or a positive integer ranging from 1 to 4.

7. A process according to claim 6 wherein the amino alcohol is tertiarybutylaminoethoxyethanol.

8. An absorbent solution comprising solvent and an amino alcohol defined by the general formula:

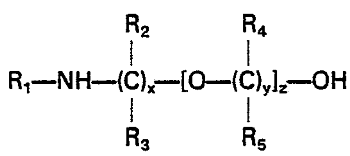

wherein $R_1$ is a primary alkyl or primary hydroxyalkyl radical having 1 to 8 carbon atoms or a branched chain alkyl, branched chain hydroxyalkyl, cycloalkyl or hydroxycycloalkyl radical having a total of 3 to 8 carbon atoms, $R_2$, $R_3$, $R_4$ and $R_5$ are each independently hydrogen or a $C_1$—$C_4$ alkyl or $C_1$—$C_4$ hydroxyalkyl radical, with the proviso that when the carbon atom of $R_1$ directly bonded to the nitrogen atom is primary, both $R_2$ and $R_3$ are alkyl or hydroxyalkyl radicals and that when the carbon atom of $R_1$ directly bonded to the nitrogen atom is secondary, at least one of $R_2$ or $R_3$ is an alkyl or hydroxyalkyl radical, x and y are each positive integers independently ranging from 2 to 4 and z is 0 or a positive integer ranging from 1 to 4.

9. A solution according to claim 8 wherein the solvent is a physical absorbent.

10. A solution according to claim 9 wherein the amino alcohol is tertiarybutylaminoethoxyethanol.

**Patentansprüche**

1. Verfahren zur Entfernung von $H_2S$ aus einem normalerweise gasförmigen Strom mit einer Absorptionslösung, die gekennzeichnet, ist durch ein Lösungsmittel und einen sterisch gehinderten sekundären Aminoalkohol mit einem kumulativen $^-E_s$-Wert von mehr als 1,75.

2. Verfahren nach Anspruch 1, dadurch gekennzeichnet, daß das Lösungsmittel Wasser, ein physikalisches Absorptionsmittel oder eine Mischung derselben ist.

3. Verfahren nach Anspruch 1 oder 2, dadurch gekennzeichnet, daß der normalerweise gasförmige Strom auch $CO_2$ enthält und der $H_2S$ selektiv aus dem Strom absorbiert wird.

4. Verfahren nach einem der Ansprüche 1 bis 3, dadurch gekennzeichnet, daß der Aminoalkohol einen $pK_a$-Wert bei 20°C von mehr als 8,6 besitzt.

5. Verfahren nach einem der Ansprüche 1 bis 4, dadurch gekennzeichnet, daß die Gesamtkonzentration an Aminoalkohol in der Absorptionslösung im Bereich von etwa 0,1 bis 6 Mol je Liter liegt, das Verfahren bei einer Temperatur im Bereich von etwa 20 is 100°C und einem Druck im Bereich von 0,4 bis 140,6 kg/cm$^2$ (39 bis 13779 KN/m$^2$) durchgeführt wird, die Absorptionslösung durch Erwärmen auf eine Temperatur im Bereich von 50 bis etwa 170°C und bei einem Druck im Bereich von 0,07 bis 3,5 kg/cm$^2$ (6,9 bis 343 KN/m$^2$) regeneriert wird und die Lösung von ihrem absorbierten $H_2S$ gestript wird.

6. Verfahren nach einem der Ansprüche 1 bis 5, dadurch gekennzeichnet, daß der Aminoalkohol definiert ist durch die allgemeine Formel:

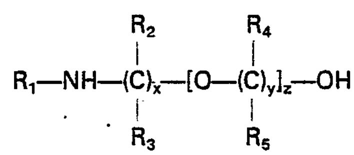

in der $R_1$ ein primärer Alkyl- oder primärer Hydroxyalkylrest mit 1 bis 8 Kohlenstoffatomen oder ein verzweigtkettiger Alkylrest, ein verzweigtkettiger Hydroxyalkylrest, ein Cycloalkylrest oder ein Hydroxycycloalkylrest mit insgesamt 3 bis 8 Kohlenstoffatomen ist, $R_2$, $R_3$, $R_4$ und $R_5$ jeweils unabhängig voneinander Wasserstoff oder ein $C_1$—$C_4$-Alkyl- oder $C_1$—$C_4$-Hydroxyalkylrest sind mit der Maßgabe, daß, wenn das direkt an das Stickstoffatom gebundene Kohlenstoffatom von $R_1$ primär ist, sowohl $R_2$ als auch $R_3$ Alkyl- oder Hydroxyalkylreste sind und daß, wenn das direkt an das Stickstoffatom gebundene Kohlenstoffatom von $R_1$ sekundär ist, mindestens einer der Reste $R_2$ oder $R_3$ ein Alkyl- oder Hydroxyalkylrest ist, x und y jeweils positive ganze Zahlen sind, die unabhängig voneinander von 2 bis 4 reichen, und z 0 oder eine positive ganze Zahl im Bereich von 1 bis 4 ist.

7. Verfahren nach Anspruch 6, dadurch gekennzeichnet, daß der Aminoalkohol tertiär-Butylaminoethoxyethanol ist.

8. Absorptionslösung gekennzeichnet durch ein Lösungsmittel und einen Aminoalkohol gemäß der allgemeinen Formel:

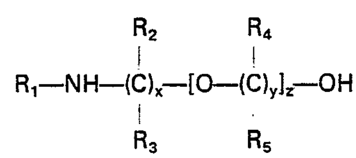

in der in der $R_1$ ein primärer Alkyl- oder primärer Hydroxyalkylrest mit 1 bis 8 Kohlenstoffatomen oder ein verzweigtkettiger Alkylrest, ein verzweigtkettiger Hydroxyalkylrest, ein Cycloalkylrest oder ein Hydroxycycloalkylrest mit insgesamt 3 bid 8 Kohlenstoffatomen ist, $R_2$, $R_3$, $R_4$ und $R_5$ jeweils unabhängig voneinander Wasserstoff oder ein $C_1$—$C_4$ - Alkyl- oder $C_1$—$C_4$ - Hydroxyalkylrest sind mit der Maßgabe, daß, wenn das direkt an das Stickstoffatom gebundene Kohlenstoffatom von $R_1$ primär ist, sowohl $R_2$ als auch $R_3$ Alkyl- oder Hydroxyalkylreste sind und daß, wenn das direkt an das Stickstoffatom gebundene Kohlenstoffatom von $R_1$ sekundär ist, mindestens einer der Reste $R_2$ oder $R_3$ ein Alkyl- oder Hydroxyalkylrest ist, x und y jeweils positive ganze Zahlen sind, die unabhängig voneinander von 2 bis 4 reichen, und z 0 oder eine positive ganze Zahl im Bereich von 1 bis 4 ist.

9. Lösung nach Anspruch 8, dadurch gekennzeichnet, daß das Lösungsmittel ein physikalisches Absorptionsmittel ist.

10. Lösung nach Anspruch 9, dadurch gekennzeichnet, daß der Aminoalkohol tertiär-Butylaminoethoxyethanol ist.

**Revendications**

1. Procédé d'élimination de $H_2S$ d'un courant normalement gazeux au moyen d'une solution absorbante, cette solution comprenant un solvant et un alcool-amine secondaire présentant un empêchement stérique et ayant une valeur $^-E_s$ cumulée supérieure à 1,75.

2. Procédé selon la revendication 1, caractérisé en ce que le solvant est l'eau, un absorbant physique ou un mélange de ceux-ci.

3. Procédé selon la revendication 1 ou 2, caractérisé en ce que le courant normalement gazeux contient aussi $CO_2$ et que le $H_2S$ est absorbé sélectivement à partir du courant.

4. Procédé selon l'une quelconque des revendications 1 à 3, caractérisé en ce que l'amino-alcool a un $pK_a$ à 20°C supérieur à 8,6.

5. Procédé selon l'une quelconque des revendications 1 à 4, caractérisé en ce que la concentration totale d'amino-alcool dans la solution absorbante est comprise entre environ 0,1 et 6 moles par litre, en ce que le procédé est réalisé à une température comprise entre environ 20 et 100°C et sous une pression comprise entre 0,4 et 140,6 kg/cm$^2$ (entre 39 et 13779 kN/m$^2$), en ce que la solution absorbante est régénérée par chauffage à une température comprise entre 50 et environ 170°C et sous une pression comprise entre 0,07 et environ 3,5 k/cm$^2$ (entre 6,9 et 343 kN/m$^2$) et en ce que le $H_2S$ absorbé est entraîné à partir de la solution.

6. Procédé selon l'une quelconque des revendications 1 à 5, caractérisé en ce que l'amino-alcool est défini par la formule générale:

$$R_1-NH-\underset{R_3}{\overset{R_2}{|}}\!\!(C)_x-[O-\underset{R_5}{\overset{R_4}{|}}\!\!(C)_y]_z-OH$$

dans laquelle $R_1$ est un radical alkyle primaire ou un radical hydroxyalkyle primaire ayant 1 à 8 atomes de carbone ou un radical alkyle à chaîne ramifiée, hydroxyalkyle à chaîne ramifiée, cycloalkyle ou hydroxycycloalkyle ayant au total 3 à 8 atomes de carbone, $R_2$, $R_3$, $R_4$ et $R_5$ sont, chacun indépendamment l'une de l'autre, un atome d'hydrogène ou un radical alkyle en $C_1$—$C_4$ ou hydroxyalkyle en $C_1$—$C_4$, à condition que lorsque l'atome de carbone de $R_1$ lié directement à l'atome d'azote est primaire, $R_2$ et $R_3$ soient tous les deux des radicaux alkyles ou hydroxyalkyles et que lorsque l'atome de carbone de $R_1$ lié directement à l'atome d'azote est secondaire, un au moins des radicaux $R_2$ et $R_3$ soit un radical alkyle ou hydroxyalkyle, x et y sont chacun des nombres entiers positifs allant indépendamment de 2 à 4 et z est égal à 0 ou est un nombre entier positif allant de 1 à 4.

7. Procédé selon la revendication 6, caractérisé en ce que l'amino-alcool est le tertiobutylaminoéthoxyéthanol.

8. Solution absorbante comprenant un solvant et un amino-alcool défini par la formule générale:

$$R_1-NH-\underset{R_3}{\overset{R_2}{|}}\!\!(C)_x-[O-\underset{R_5}{\overset{R_4}{|}}\!\!(C)_y]_z-OH$$

dans laquelle $R_1$ est un radical alkyle primaire ou hydroxyalkyle primaire ayant 1 à 8 atomes de carbone ou un radical alkyle à chaîne ramifiée, hydroxyalkyle à chaîne ramifiée, cycloalkyle ou hydroxycycloalkyleayant un total de 3 à 8 atomes de carbone, $R_2$, $R_3$, $R_4$ et $R_5$ sont, chacun indépendamment l'un de l'autre, un atome d'hydrogène ou un radical alkyle en $C_1$—$C_4$ ou hydroxyalkyle en $C_1$—$C_4$, à condition que lorsque l'atome de carbone de $R_1$ lié directement à l'atome d'azote est primaire, $R_2$ et $R_3$ soient tous les deux des radicaux alkyles ou hydroxyalkyles et que lorsque l'atome de carbone de $R_1$ lié directement à l'atome d'azote est secondaire, l'une au moins de radicaux $R_2$ et $R_3$ soit un radical alkyle ou hydroxyalkyle, x et y sont chacun des nombres entiers positifs allant indépendamment de 2 à 4 et z est égal à 0 ou est un nombre entier positif allant de 1 à 4.

9. Solution selon la revendication 8, caractérisée en ce que le solvant est un absorbant physique.

10. Solution selon la revendication 9, caractérisée en ce que l'amino-alcool est le tertiobutylaminoéthoxyéthanol.

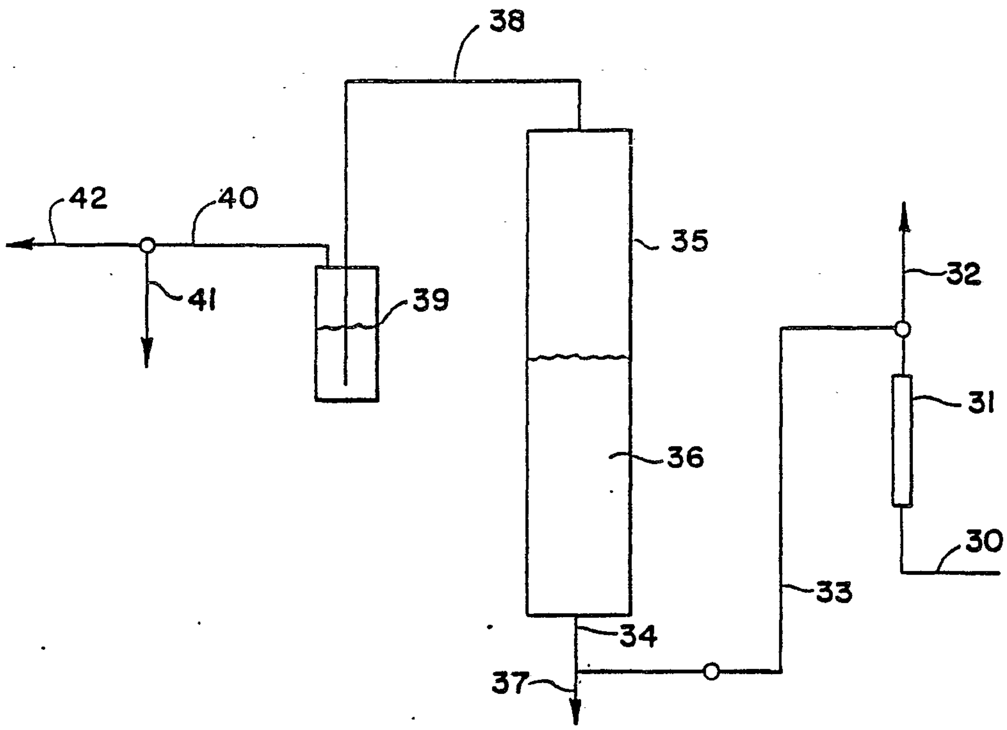


Sparged absorber unit for selective $H_2S$ removal

FIG. 1

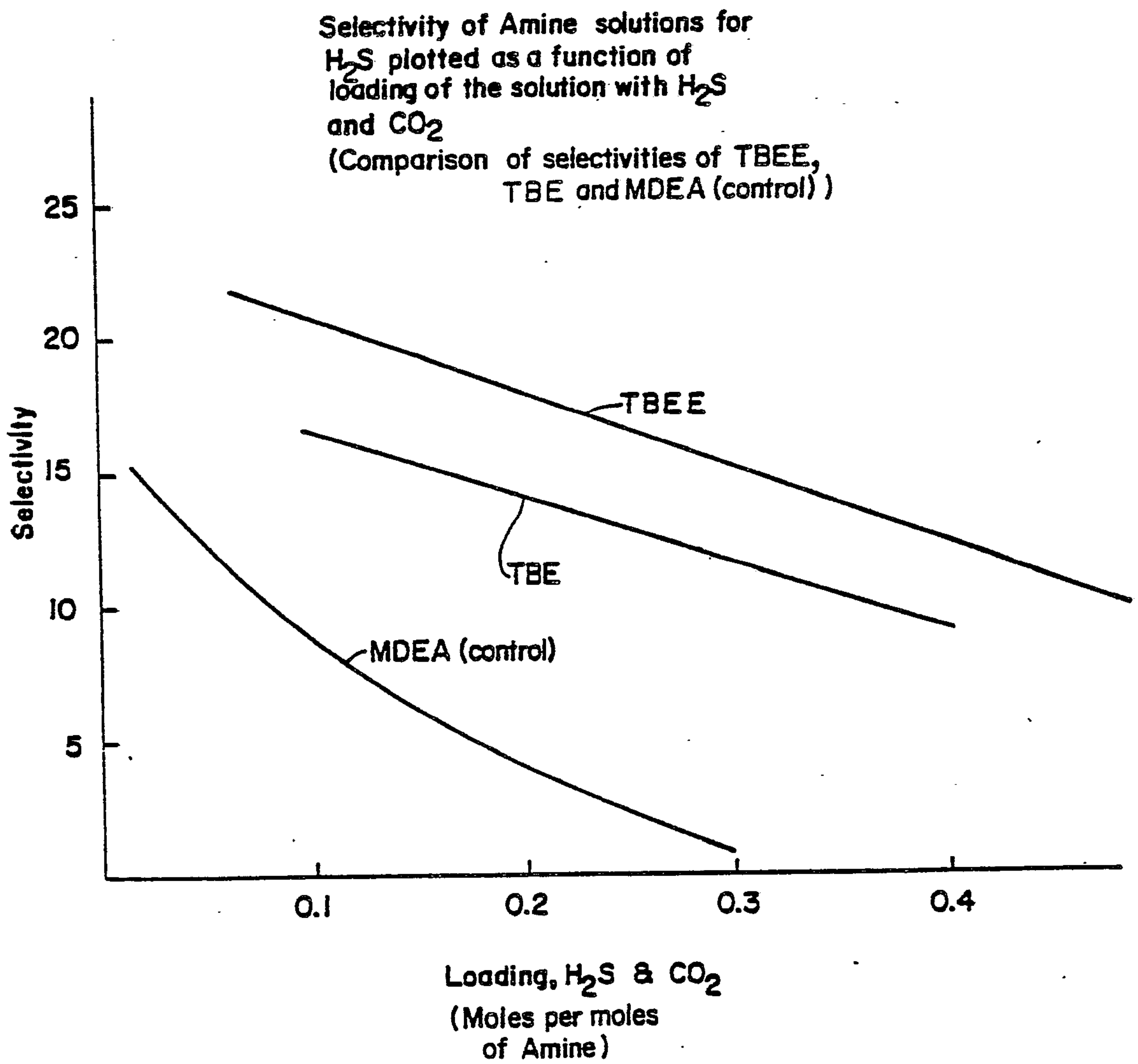

Selectivity of Amine solutions for $H_2S$ plotted as a function of loading of the solution with $H_2S$ and $CO_2$
(Comparison of selectivities of TBEE, TBE and MDEA (control) )
25
20
15
10
5
Selectivity
TBEE
TBE
MDEA (control)
0.1
0.2
0.3
0.4
Loading, $H_2S$ & $CO_2$
(Moles per moles of Amine)


FIG. 2

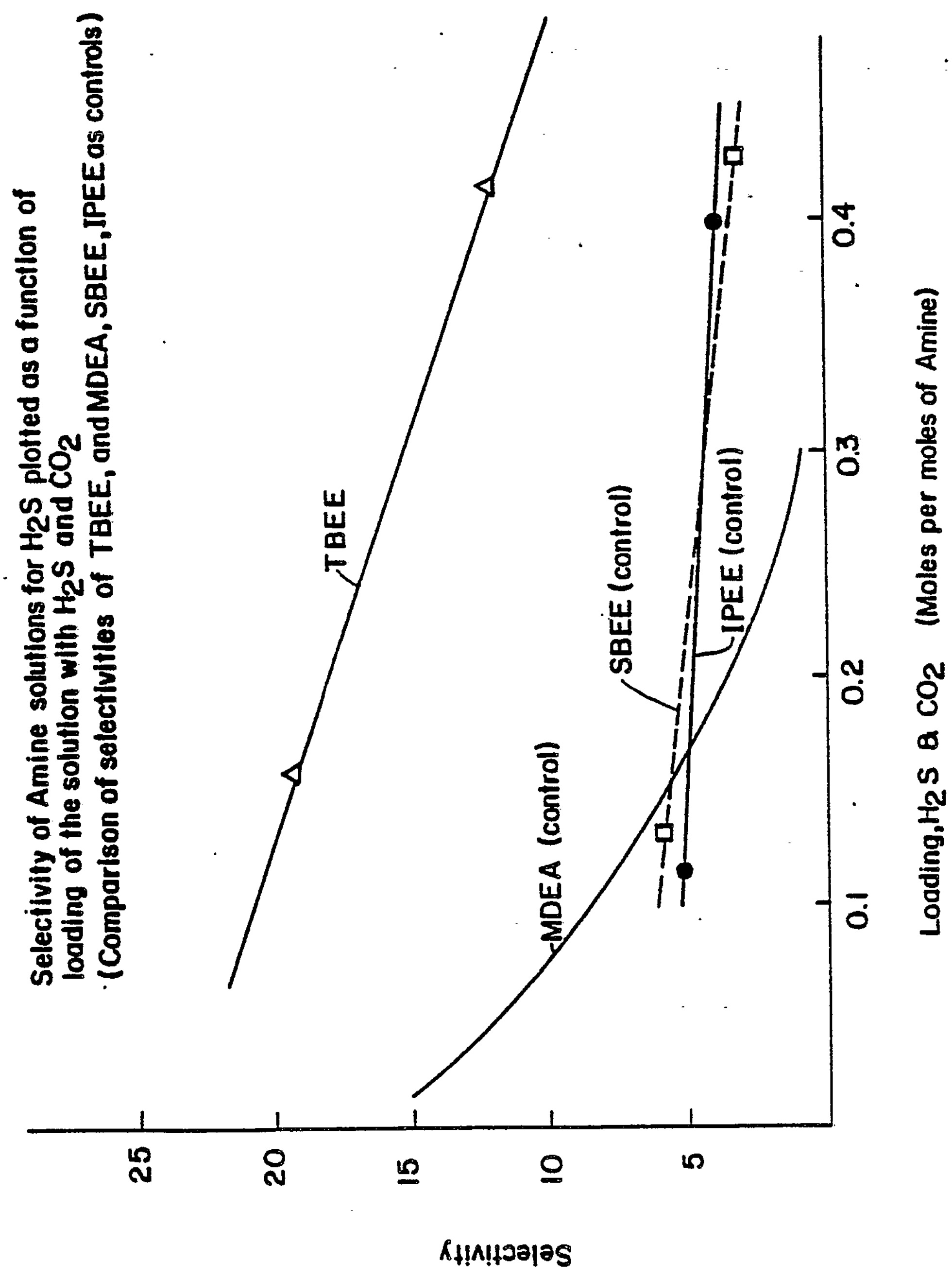

Selectivity of Amine solutions for $H_2S$ plotted as a function of loading of the solution with $H_2S$ and $CO_2$
(Comparison of selectivities of TBEE, and MDEA, SBEE, IPEE as controls)
TBEE
SBEE (control)
IPEE (control)
MDEA (control)
25
20
15
10
5
Selectivity
0.1
0.2
0.3
0.4
Loading, $H_2S$ & $CO_2$ (Moles per moles of Amine)


FIG. 3

Selectivity of Amine solutions for $H_2S$ plotted as a function of loading of the solutions with $H_2S$ and $CO_2$
(Comparison of selectivities of TBB, ADMHD, TBP, 2-TBP with MDEA as control)

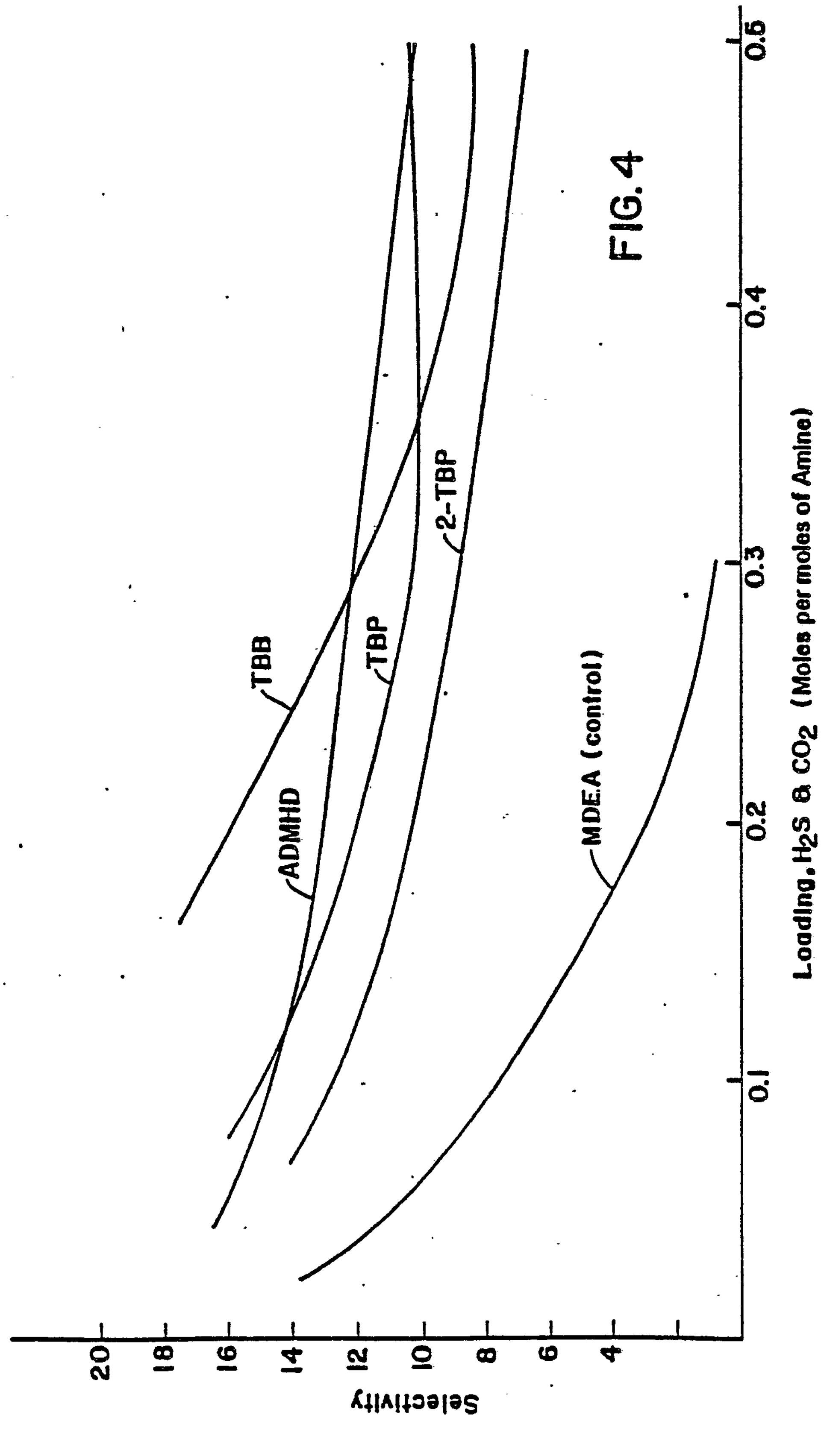


FIG. 4

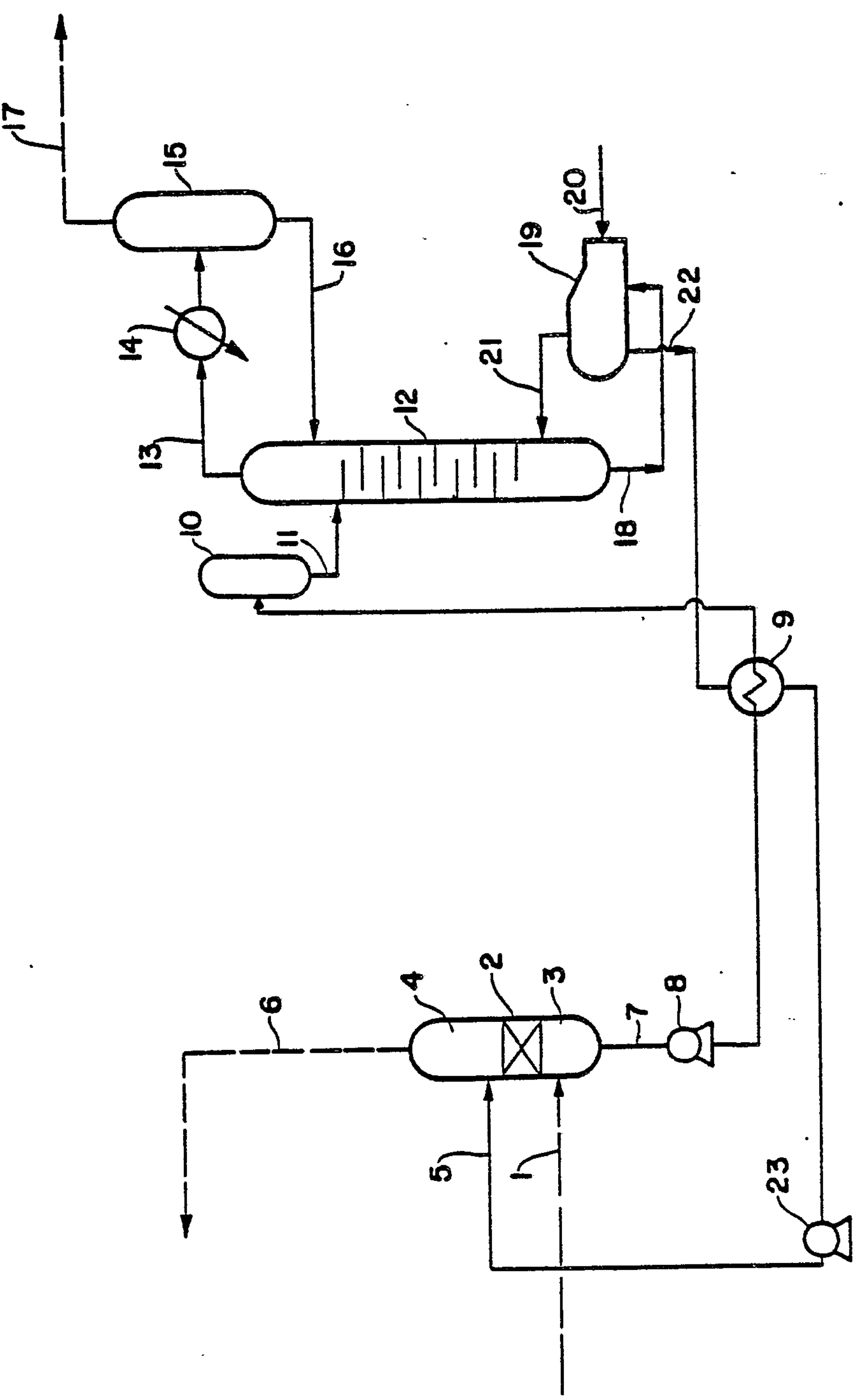


Absorption-regeneration unit for selective $H_2S$ removal

FIG. 5

$H_2S$ leak rate of Amine solutions as a function of $H_2S$ loading

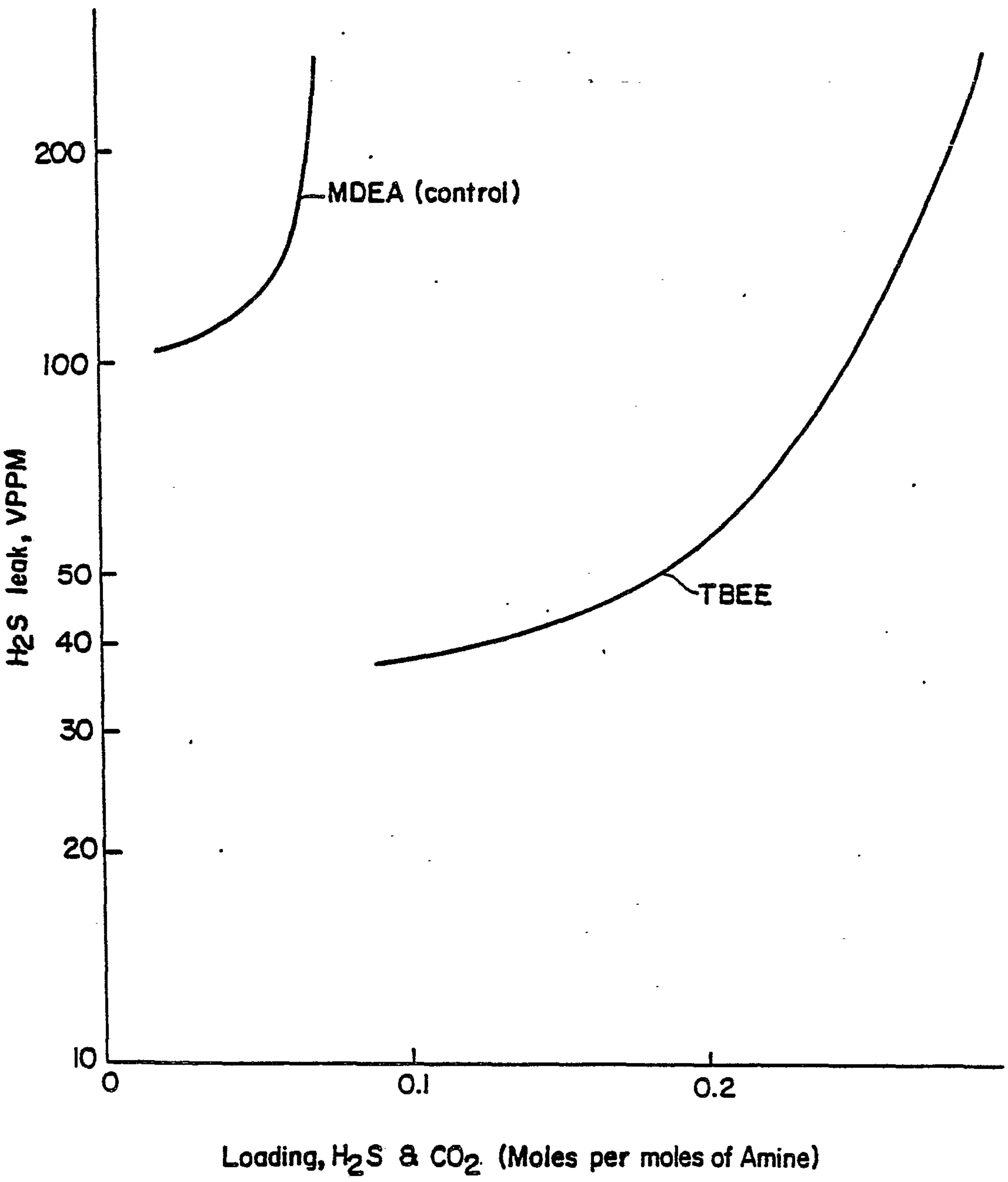


FIG. 6